# EUROPÄISCHE PATENTSCHRIFT

(11) **EP 0 535 175 B1**
(45) Veröffentlichungstag und Bekanntmachung des Hinweises auf die Patenterteilung: **12.06.1996**
(21) Anmeldenummer: 92904834.6
(22) Anmeldetag: 19.02.1992
(51) Int. Cl.: B60R 19/40

(54) **STOSSFÄNGERSYSTEM MIT EINEM AUSFAHRBAREN STOSSFÄNGER FÜR FAHRZEUGE**
FENDER SYSTEM WITH AN EXTENSIBLE FENDER FOR VEHICLES
SYSTEME DE PARE-CHOCS EXTENSIBLE POUR VEHICULES

(30) Priorität: 20.04.1991 DE 4113031
(43) Veröffentlichungstag der Anmeldung: 07.04.1993
(73) Patentinhaber: Alfred Teves GmbH & Co. OHG, D-51702 Bergneustadt (DE)
(72) Erfinder: REUBER, Gerhard, D-5962 Drolshagen (DE); BRAUN, Achim, D-5223 Nümbrecht (DE)
(74) Vertreter: Portwich, Peter
(86) Internationale Anmeldenummer: EP9200345
(87) Internationale Veröffentlichungsnummer: WO9218355

(56) Entgegenhaltungen:
- EP-A- 0 332 830
- AU-D- 6 654 374
- DE-B- 1 093 233
- FR-A- 1 192 983
- FR-A- 2 191 503
- FR-A- 2 194 170
- US-A- 3 947 061

## Beschreibung

Mit steigendem Bedarf an mehr Sicherheit für Fahrzeuge, speziell Personenkraftwagen und insbesondere die Fahrgäste derartiger Fahrzeuge, sind verbesserte Stoßstangensysteme vorgeschlagen worden. Derartige Systeme sind in der Lage, nach der europäischen ECE-Norm Fahrzeuge aus einer Geschwindigkeit von 4 km/h ohne Schaden abzufangen. Weitere verbesserte Systeme sind in der Lage, nach der entsprechenden US-Norm Fahrzeuge aus einer Geschwindigkeit von etwa 8 km/h schadensfrei abzubremsen.

Im Zuge einer weiteren Verbesserung der Stoßdämpfersysteme ist beabsichtigt, Geschwindigkeiten bis 15 km/h ohne Schaden für das Fahrzeug durch das System abbremsen zu können. Berechnungen haben allerdings ergeben, daß hierzu das vordere Ende des Stoßfängers mindestens weitere 10 cm über das heute übliche Maß hervorstehen müßten. Eine derartige Ausgestaltung ist aber sowohl aus Gründen des benötigten Platzes im Ruhezustand des Fahrzeugs als auch aus optischen Gesichtspunkten nachteilig.

Aus der DE-A-31 49 113 ist es bekannt, die Stoßstange ausfahrbar zu machen. Dabei wird die im Crashfall einfahrende Stoßstange gleichzeitig dazu mit ausgenutzt, den Lenker in eine für den Fahrzeugfahrer unschädliche Stellung zu bringen.

Aus der DE-A-29 47 947 ist es weiterhin bekannt, eine Stoßstange beweglich an dem Fahrzeug zu befestigen. Dabei ist die Stoßstange mit zwei parallelen, sich in Längsrichtung des Fahrzeuges erstreckenden waagerechten Stangen verbunden, die an ihren entgegengesetzten Seiten je ein kolbenförmiges Element aufweisen. Diese Elemente sind in mit Flüssigkeit gefüllten Zylindern gelagert.

Aus dem DE-U-85 08 904 ist es weiterhin bekannt, Stoßfänger mit einem schlauchförmigen, luftdicht verschließbaren Hohlraum zu versehen, so daß hier eine aufgrund eines pneumatischen Druckes sich ergebende Elastizität des Stoßfängers ausgenutzt wird.

Da der Schaden für das zu schützende Fahrzeug umso geringer ist, je weicher das aufprallende Fahrzeug abgefangen wird, bzw. je weicher der Aufprall des Gegenstandes auf das Fahrzeug ist, empfiehlt es sich, die Elastizität bzw. Federkonstante des Stoßfängersystems von der ausgefahrenen Länge des Stoßfängers abhängig zu machen. In der FR-A-2 191 503, die dem Oberbegriff des Anspruchs 1 zugrundegelegt ist, wird ein druckmittelgedämpfter Stoßfänger vorgeschlagen, bei dem eine Ausgleichsöffnung zwischen einem Ausgleichsraum und einem Zylinder in Abhängigkeit von der Stellung des Stoßfängers verändert wird, und zwar umso mehr vergrößert wird, je weiter der Stoßfänger ausgefahren ist. Damit reagiert der Stoßfänger auf einen Aufprall immer härter, je weiter aufgrund des Aufpralls der Stoßfänger einfährt bzw. von Anfang an eingefahren ist. Zur Verwirklichung einer derartigen variablen Drossel wird ein schräg zulaufender Stift verwendet, welcher durch einen ringförmigen Wulst verläuft, der an einer Zylinderwand angebracht ist. Der Stift ist mit dem Stoßfänger starr verbunden und wird mit diesem ein- und ausgefahren. Hierdurch ergibt sich ein unterschiedlich breiter Ringspalt zwischen Stift und Wulst, durch welchen das ein- und austretende Druckmittel mehr oder weniger gedrosselt wird. Da ein derartig schräg zulaufender Stift keine Führungsaufgaben übernehmen kann, ist an seinem Ende noch ein Führungsglied mittels einer Schraube befestigt, welches innerhalb des Zylinders den Stift axial führt. Ein derartiger schräg zulaufender Stift mit aufgeschraubtem Führungsglied ist relativ aufwendig herzustellen.

Die Aufgabe der vorliegenden Erfindung besteht darin, ein Stoßfängersystem gemäß dem Oberbegriff des Anspruchs 1 zu schaffen, welches ohne Funktionseinschränkungen mit einer geringeren Teilezahl auskommt und einfacher herzustellen ist.

Diese Aufgabe wird gelöst in Verbindung mit dem kennzeichnenden Teil des Anspruchs 1. Bei einer Drosselnut, welche in einen zylindrischen Stift, bleibt die zylindrische Form des Stifts weitgehend erhalten, so daß ein derartiger Stift selbst innerhalb eines Zylinders der axialen Führung dienen kann und kein zusätzliches Element zur axialen Führung benötigt. Eine Nut ist leichter in einen Gegenstand einzufräsen, als einen zylindrischen Stift an seinem gesamten Umfang in eine konische Form zu bringen. Eine variable Drosselung des Druckmittels ergibt sich dann durch eine unterschiedliche Tiefe der Nut in ihrem axialen Verlauf.

Bei derartigen Systemen ist es wichtig, daß der Stoßfänger nicht nur den hinreichenden Abstand zwischen dem gefährdenden Gegenstand und der unmittelbaren Kontur des zu schützenden Fahrzeugs schafft, sondern gleichzeitig auch noch den zur Verfügung stehenden Freiraum in optimaler Weise ausnutzt, um die in der Gefahrensituation gefährliche dynamische Energie des Fahrzeugs zu beseitigen. Um hier Abhilfe zu schaffen, wird in Weiterbildung der Erfindung gemäß dem kennzeichnenden Teil von Anspruch 3 vorgeschlagen, den Stoßfänger analog zu einem an sich bekannten Stoßfänger aufzubauen, indem über eine Druckmitteldämpfung der Aufprall des Fahrzeugs abgefedert wird.

Soweit man als Druckmittel eine Flüssigkeit, insbesondere Bremsflüssigkeit, verwendet, empfiehlt es sich in Weiterbildung der Erfindung einen Ausgleichsraum für die Flüssigkeit vorzusehen, aus dem beim Ausfahren des Stoßfängers über ein dann öffnendes Ventil Flüssigkeit in den Zylinder gebracht werden kann.

Da Gefahrensituationen u.U. sehr rasch auftreten können, ist darauf zu achten, daß der Stoßfänger auch hinreichend schnell ausgefahren werden kann. Will man hierbei eine Ausfahrzeit erreichen, die eine Sekunde nicht überschreitet, so empfiehlt sich in Weiterbildung der Erfindung die Anwendung der Merkmalskombination nach Anspruch 5. Im Prinzip bedeutet dies, daß der Stoßfänger mit einem Federspeicher versehen ist, der im Bedarfsfalle entladen wird und die Stoßstange schnell herausfährt, wobei die Ausfahrbewegung bei etwa 10 cm liegen kann. Das Herausfahren um diesen Betrag empfiehlt sich schon ab einer Fahrzeuggeschwindigkeit von 10 km/h.

Eine andere Möglichkeit zum Herausfahren des Stoßfängers, die sich aber auch zum nachfolgenden Einfahren eignet, ist die Verwendung einer Druckmittelpumpe, die den entsprechenden Druckmitteldruck im Zylinder speichert, um über den Kolben des Stoßfängers im Bedarfsfall schnell auszufahren. Schafft man mit der Pumpe den entsprechenden Unterdruck, so ist es analog möglich, den Kolben wieder einzufahren.

Mit Hilfe geeignet angeordneter Ventile wird der Zylinderraum im Crashfall gegenüber dem Ausgleichsraum abgeriegelt. Das sich beim Rückholen des Stoßfängers öffnende Ventil muß derart aufgebaut sein, daß es sofort wieder schließt, falls während der Einfahrbewegung überraschend ein Crashfall auftritt, so daß auch in dieser Zwischenstellung der Stoßfänger wirksam ist.

Um die Elastizität zu verbessern und den Bedarf an flüssigem Druckmittel herabzusetzen, empfiehlt es sich in Weiterbildung der Erfindung, den Ausgleichsraum während des Crashfalls an dem mit luftgefüllten Ende zu verschließen, da sich hierdurch die Elastizität des Systems durch die Ausgestaltung des mit Luft gefüllten Teils des Ausgleichsraums verbessern läßt. Umgekehrt läßt sich entsprechend der Merkmalskombination nach Anspruch 8 über ein gasförmiges Druckmittel (Luft) fördernde Pumpe der Stoßfänger herausfahren, indem über die Pumpe in den Ausgleichsraum mit Überdruck Gas bzw. Luft gefördert wird. Dabei empfiehlt sich in Weiterbildung der Erfindung zwischen den beiden unterschiedlichen Druckmitteln eine mechanische Trennschicht einzusetzen, die in Weiterbildung der Erfindung aus einem verschiebbaren Dichtungsring bestehen kann, welcher die beiden Druckmittel sauber voneinander trennt.

Will man auf die Verwendung einer Pumpe zum Einfahren des Stoßfängers verzichten, so kann sich hier in Weiterbildung der Erfindung gemäß Anspruch 11 ein elektrischer Antrieb empfehlen. Bei hinreichender Übersetzung kann dieser Antrieb auch zum Herausfahren des Stoßfängers angewendet werden. Um die Wirksamkeit des Stoßfängers auch bei Zwischenstellungen zu garantieren, empfiehlt sich hier die Anwendung der Merkmalskombination nach Anspruch 12. Dabei läßt sich auch in bestimmten Fällen auf die Anwendung von Druckmittel überhaupt verzichten, indem die Federungswirkung der Feder des Federspeichers zur elastischen Aufnahme der Stoßenergie angewendet wird, während das gesamte System mit dem Elektromotor eingefahren wird und damit der Federspeicher wieder geladen werden kann.

Hinsichtlich des Auslösens der Ausfahrbewegung des Stoßfängers empfiehlt sich in Weiterbildung der Erfindung die Merkmalskombination nach Anspruch 14.

Die notwendige Geschwindigkeit der Ausfahrbewegung hängt davon ab, wie konkret die Gefahrensituation ist, welche durch den Sensor festgestellt wird. Steht ein Unfall unmittelbar bevor, so muß die Ausfahrbewegung sehr schnell erfolgen. Dies ist beispielsweise beim Auslösen durch einen heftigen Bremsvorgang oder eine erhebliche Fahrzeugverzögerung der Fall. Andernfalls kann die Ausfahrbewegung relativ langsam erfolgen, wenn diese aufgrund nur potentieller Erhöhung der Gefahr, beispielsweise der Fahrgeschwindigkeitserhöhung, erfolgt.

Ausführungsbeispiele der Erfindung werden nachfolgend anhand der Zeichnung erläutert. Darin zeigt:
- Fig. 1 bis 4: ein erstes Ausführungsbeispiel der Erfindung,
- Fig, 5 bis 7: ein zweites Ausführungsbeispiel der Erfindung und
- Fig. 8: ein drittes Ausführungsbeispiel der Erfindung.

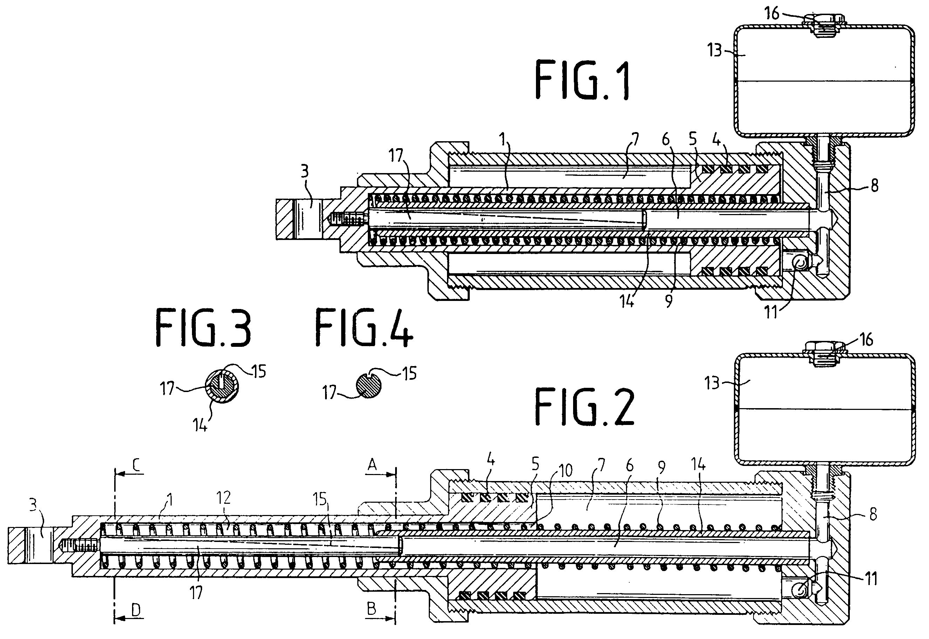

Fig. 1 bis 4 zeigen die wesentlichen Teile eines ersten Ausführungsbeispiels des erfindungsgemäßen Stoßfängersystems, bei dem allerdings die Steuerungseinrichtung und eine zum Rückholen des Stoßfängers geeignete Einrichtung nicht dargestellt wurden. Neben der somit fehlenden Auslösung für den Antrieb ist in den Fig. 1 und 2 weiterhin nicht die Arretierung dargestellt, welche das System in der aus Fig. 1 ersichtlichen Ruhelage hält.

Fig. 1 und 2 zeigen eine rohrförmige Kolbenstange 1, an deren Ende ein Befestigungsloch 3 vorgesehen ist, und an der das senkrecht zur Betrachtungsebene liegende Stoßfängerblatt befestigt werden kann. Üblicherweise sind zwei Systeme gemäß Fig. 1 zur Befestigung des nicht gezeigten Stoßfängerblattes vorgesehen. Es können aber auch mehr als zwei zueinander parallel geschaltete Systeme das Stoßfängerblatt tragen. Das fahrzeugseitige Ende der Kolbenstange 1 geht über in einen Kolben 5, der in einem Zylinder 7 geführt ist. Mittels Dichtungen 4 ist der Kolben 5 gegenüber der Außenwand des Zylinders 7 abgedichtet.

Ein zum Zylinder 7 konzentrischer zylinderförmiger Ausgleichsraum 6 ist über eine Ausgleichsleitung 8 mit einem Ausgleichsbehälter 13 verbunden. Zwischen dem Zylinder 7 und einem zylinderförmigen Verbindungsraum 12 innerhalb der Kolbenstange 1 befindet sich eine ringförmige Ausgleichsöffnung 10, die die beiden Räume miteinander verbindet. Der Verbindungsraum 12 und der Ausgleichsraum 6 sind über eine Drosselnut 15 miteinander verbunden, die in einen Zylinderstift 17 eingearbeitet ist. Der Zylinderstift 17 ist mit dem stoßfängerseitigen Ende der Kolbenstange 1 verschraubt und ragt durch den Verbindungsraum 12 in den Ausgleichsraum 6, in dem der gleitend geführt ist.

Wie aus den Fig. 3 und 4 ersichtlich, ist die Drosselnut 15 in dem Zylinderstift 17 in Richtung zu dem Stoßfängerblatt und damit der Öffnung 3 hin von abnehmender Höhe. Da, wie aus den Fig. 1 bis 3 zu entnehmen ist, der Zylinderstift 17 weitgehend dichtend an den Zylinderwänden des Ausgleichszylinders 14 geführt ist, welcher den Ausgleichsraum 6 begrenzt, ist die Drosselwirkung zwischen dem Zylinder und dem Ausgleichsraum 6 durch die jeweilige lichte Weite der Drosselnut 15 bestimmt, die, wie aus Fig. 3 ersichtlich, in ausgefahrener Stellung der Kolbenstange 1 relativ groß sein kann (siehe Fig. 3), andererseits in eingefahrener Stellung gemäß Fig. 1 der Kolbenstange 1 sehr eng sein kann, wie aus Fig. 4 ersichtlich ist.

Durch die ringförmige Ausgleichsöffnung 10 ragt eine Spiralfeder 9, die die Wirkung eines Federspeichers hat. Diese Feder hat die Aufgabe, die Kolbenstange 1 aus der in Fig. 1 gezeigten Lage im Bedarfsfalle sehr schnell in die in Fig. 2 dargestellte Lage auszufahren, wobei, wie weiter oben schon erläutert, nicht dargestellt wird, wie die Kolbenstange in ihrem Ruhezustand gemäß Fig. 1 verriegelt ist.

Um die Kolbenstange schnell auszufahren ist es notwendig, den sich vergrößernden Zylinderraum schnell mit Druckmittel zu füllen, welches in dem vorliegenden Beispiel eine Flüssigkeit, vorzugsweise Bremsflüssigkeit, ist. Hierzu dient das Kugelventil 11, welches beim Ausfahren der Kolbenstange 1 öffnet und so den Zutritt der Hydraulikflüssigkeit aus dem Ausgleichsbehälter 13 über die Ausgleichsleitung 8 in den Zylinder 7 freigibt. Wird dagegen eine in Fig. 2 nach rechts gerichtete Kraft über das Stoßfängerblatt auf die Kolbenstange 1 ausgeübt, so schließt das Ventil 11 und das durch den Kolben 5 verdrängte Druckmittel kann nur über die Ausgleichsöffnung 10 und die Drosselnut 15 über den Ausgleichsraum 6 in den Ausgleichsbehälter 13 gelangen.

Wie weiter oben schon erwähnt, ist die Drossel in Abhängigkeit von der Stellung der Kolbenstange 1 in ihrer lichten Weite veränderlich, so daß die elastisch nachgebende Wirkung des Stoßfängersystems mit einfahrender Kolbenstange immer mehr abninnmt.

Selbstverständlich besteht auch die Möglichkeit, in Abhängigkeit von der Fahrgeschwindigkeit des Fahrzeugs unterschiedliche Ausfahrstellungen zuzulassen, bis zu denen die Kolbenstange ausfährt, wenn eine Gefahrensituation nicht unmittelbar gegeben ist, sondern nur durch die Geschwindigkeit sich potentiell erhöht. Dadurch wird es möglich, daß sehr langsam fahrende Fahrzeuge nicht mit voll ausgefahrenem Stoßfänger fahren müssen, sondern die Ausfahrlänge der Geschwindigkeit und damit der potentiellen Gefahr angepaßt ist. Ist dann ein tatsächlicher Gefahrenfall gegeben, wird sinnvollerweise die Kolbenstange voll ausgefahren, wobei die Gefahrensituation durch eine besonders große Verzögerung des Fahrzeugs, eine besonders große Bremsbewegung des Fahrers oder durch andere Parameter erkannt werden kann, wie beispielsweise Sensoren, die auf Abstandsänderung zu dem gefährdenden Gegenstand hin, auf den Abstand selbst oder ähnliche Größen ansprechen.

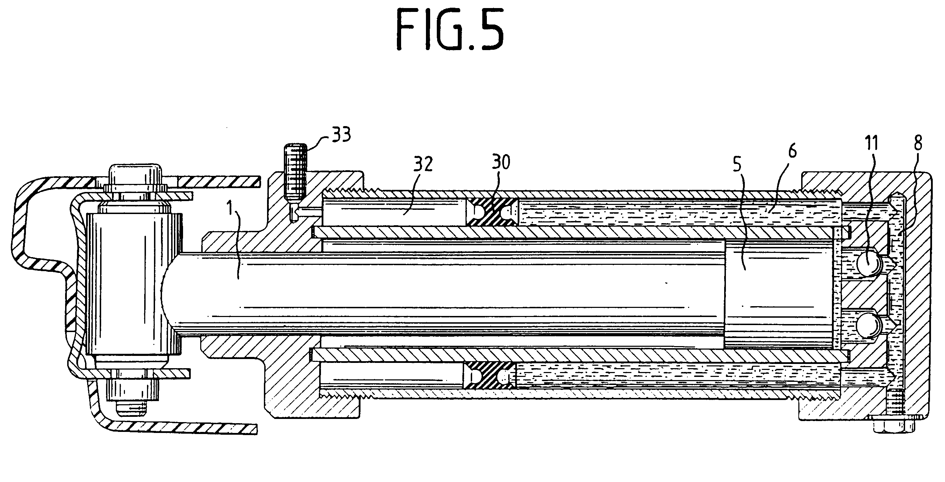

Die Fig. 5 bis 7 beschreiben eine andere Ausführungsform des erfindungsgemäßen Stoßfängersystems, wobei weder die Arretierung im Ruhezustand, noch der Antrieb zum Ausfahren der Kolbenstange 1 dargestellt wurde. Es wurden soweit wie möglich für analoge Bauteile die gleichen Bezugszeichen wie in den Fig. 1 bis 4 gewählt. Wie aus den genannten Figuren ersichtlich, bewegt sich der Kolben 5 am Ende der Kolbenstange 1 wiederum in einem Zylinder 7, der mit einem flüssigen Druckmittel, insbesondere Bremsflüssigkeit, gefüllt ist. Der Zylinder 7 ist über zwei Kugelventile 11 und einer Ausgleichsleitung 8 mit einem ringförmig den Zylinder 7 umgebenden Ausgleichsraum 6 verbunden, der mit einem pneumatischen Ventil 33 abgeschlossen ist. In dem Ausgleichsraum 6 befindet sich zum Teil Flüssigkeit, während der Teilraum 32 des Ausgleichsraums 6 mit einem pneumatischen Druckmittel, insbesondere Luft, gefüllt ist. Ebenso wie die Verschlußschraube 16 in Fig. 1 und 2 hat das Luftventil 33 die Wirkung, daß es zwar leicht Luft in den Teilraum 32 einläßt und damit eine leichte Ausfahrbewegung des Kolbens 1 unterstützt, andererseits aber durch einen vom Teilraum 32 ausgehenden Überdruck gegenüber der umgebenden Atmosphäre verschlossen wird.

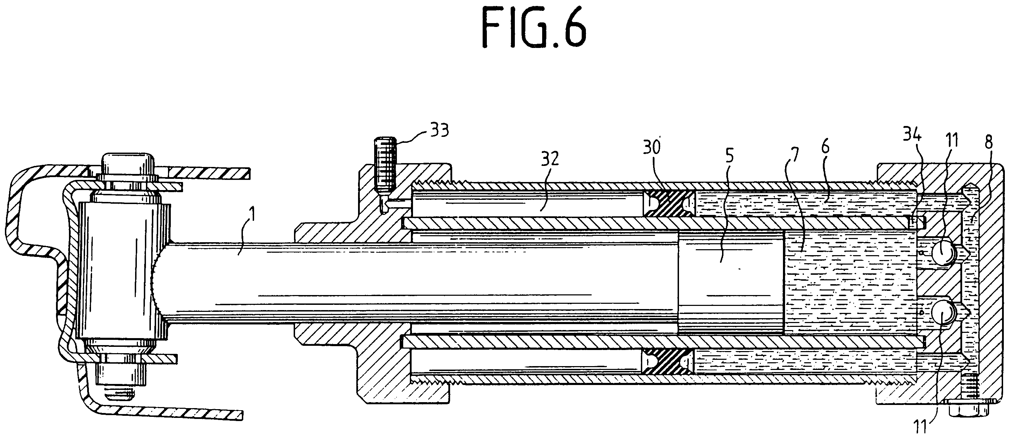

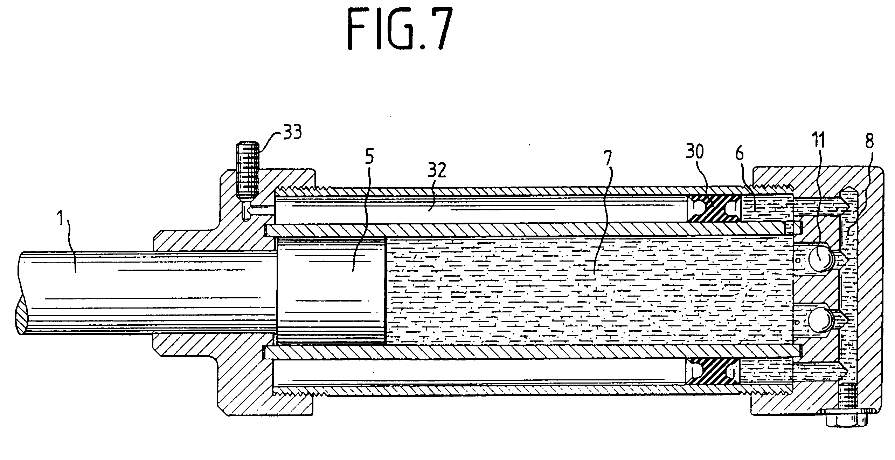

Eine vergleichbare Wirkung haben die Kugelventile 11, die zwar beim Ausfahren der Kolbenstange 1 leicht Druckmittel in den sich vergrößerenden Zylinder 7 hereinlassen, diesen aber gegenüber dem Ausgleichsraum 6 verschließen, falls der Kolben 5 im Crashfall in den Fig. 6 und 7 nach rechts gedrückt wird.

Eine Ringdichtung 30 sorgt für eine saubere Trennung zwischen dem gasförmigen und dem flüssigen Druckmittel in dem Ausgleichsraum 6, so daß keine Luft in den Zylinder 7, aber auch keine Flüssigkeit in das pneumatische Ventil 33 gelangen kann.

Im Crashfall wird nun, ausgehend von dem Zustand in Fig. 7, die Bremsflüssigkeit über die Kolbenstange 1 in dem Zylinder 7 zusammengedrückt, wobei die Ventile 11 schließen, so daß die Bremsflüssigkeit nur über eine Drosselöffnung 34 entweichen kann. Die Elastizität des Systems beruht aber nicht nur auf der lichten Weite der Drosselöffnung 34, sondern auch auf dem sich durch Einfahren der Kolbenstange 1 in dem Teilraum 32 sich verstärkenden pneumatischen Druck. Auf diese Weise erhält man auch eine veränderliche Kennlinie für die Elastizität des Systems, die zum einen als Grundgröße durch die Weite der Drosselöffnung 34, zum anderen aber durch die wachsende Reaktionskraft des Drucks in dem Teilraum 32 bestimmt ist.

Eine Möglichkeit zum Ausfahren des Stoßfängers und damit der Kolbenstange 1 besteht darin, daß durch eine Druckmittelquelle, insbesondere eine pneumatische Pumpe, über das Ventil 33 Druckmittel in den Teilraum 3 gepreßt wird, so daß die Ringdichtung 30 in Fig. 1 nach rechts verschoben (siehe Fig. 6) wird, indem das in dem Ausgleichsraum 6 befindliche flüssige Druckmittel über die Ventile 11 in den Zylinder 7 gepreßt und damit die Kolbenstange 1 ausgefahren wird. Diese Antriebsmöglichkeit ist umgekehrt auch in entgegengesetzter Richtung gegeben, indem mittels eines Unterdrucks Druckmittel aus dem Teilraum 32 abgesaugt wird, wodurch über den entstehenden Unterdruck und den atmosphärischen Druck auf die Kolbenstange 1 diese eingefahren wird. Dies setzt allerdings eine entsprechende Anordnung zusätzlicher Ventile voraus, da hier wegen des sich schließenden Ventils 33 eine zusätzliche Möglichkeit geschaffen werden muß, Unterdruck in den Teilraum 32 zu bringen.

Bei hinreichender Abdichtung des Systems kann eine andere Möglichkeit des Antriebs darin bestehen, mittels eines äußeren Antriebs darin bestehen, mittels eines äußeren Antriebs, beispielsweise über einen Elektromotor, die Kolbenstange 1 einzufahren und dabei den Teilraum 32 durch den dort entstehenden Überdruck derart vorzuspannen, daß der entstehende Überdruck ausreicht, die Kolbenstange 1 im Bedarfsfalle schnell auszufahren. Es würde dann der Überdruck in dem Teilraum 32 bei eingerasteter Stellung der Kolbenstange 1 in der Ruhelage die Aufgabe des Federspeichers mit der Feder 9 in Fig. 1 übernehmen.

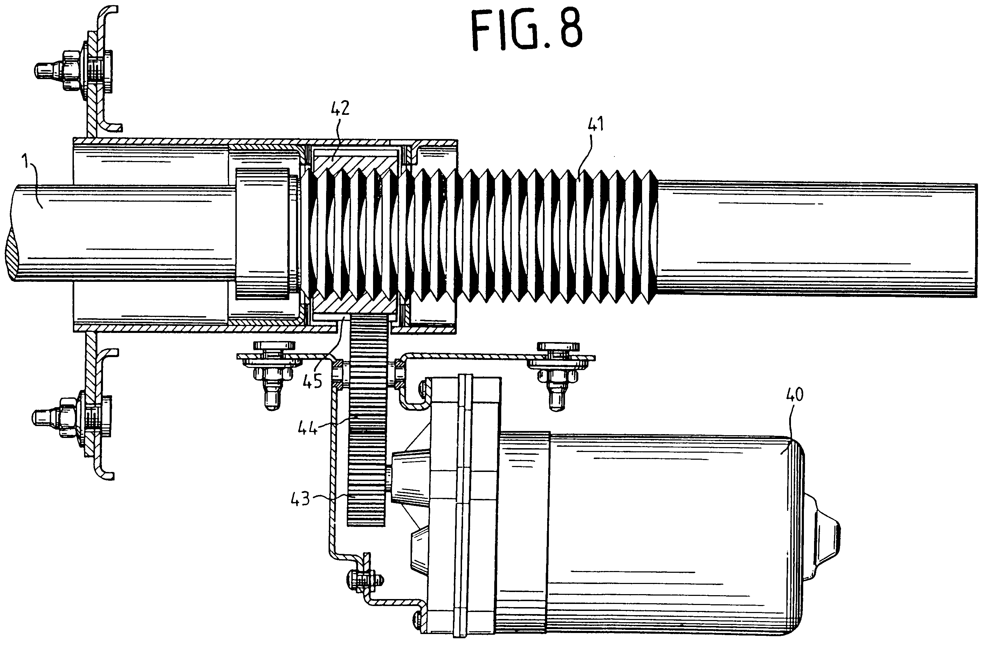

In Fig. 8 ist auch die Möglichkeit des Antriebs der Kolbenstange 1 mittels eines Elektromotors 40 gezeigt. Dabei besitzt die nicht drehbar, aber längs verschiebbar gelagerte Kolbenstange 1 ein selbsthemmendes Außengewinde 41, an der eine drehbare, aber nicht längs verschiebbare Mutter 42 mit ihrem Innengewinde angreift. Die Mutter wird von dem Elektromotor 40 über eine Zahnradübersetzung angetrieben, die aus den Zahnrädern 43,44 besteht, die an der Außenverzahnung 45 der Mutter 42 angreifen. Durch die Wirkung des Elektromotors 40 wird je nach dessen Drehrichtung die Kolbenstange 1 eingefahren oder ausgefahren. Dabei ist insbesondere wichtig, daß durch die Selbsthemmungswirkung des aus dem Außengewinde 41 und dem Innengewinde der Mutter 42 bestehenden Gewindes der Kolben 1 in jeder Stellung verriegelt ist, die er gerade einnimmt. Damit bietet dieser Antrieb auch dann einen Schutz, wenn ein Crashfall während einer Antriebsbewegung der Kolbenstange 1 auftritt. Der in Fig. 8 gezeigte Antrieb ist hauptsächlich als Ergänzung zu den Systemausgestaltungen gemäß den Fig. 1 bis 4 bzw. 5 bis 7 zu sehen, da seine Ausfahrgeschwindigkeit gegenüber der Wirkung des Federspeichers erheblich geringer ist, andererseits ihm die elastisch dämpfende Wirkung fehlt, wie sie in diesen genannten Systemen beschrieben ist. Somit läßt sich der Antrieb nach Fig. 8 beispielsweise zum Zurückholen der Kolbenstange 1 und Laden des Federspeichers 9 des Systems nach Fig. 1 bis 4 einsetzen, indem mittels des Antriebs gemäß Fig. 8 das System aus dem Zustand gemäß Fig. 2 in den Zustand gemäß Fig. 1 gebracht und dort verriegelt wird.

Entsprechendes gilt für das Spannen des Systems gemäß Fig. 5 bis 7, indem durch den Antrieb nach Fig. 8 die Kolbenstange 1 aus der Lage nach Fig. 7 in die Lage nach Fig. 5 gebracht und damit der Teilraum 32 den zum schnellen Ausfahren der Kolbenstange 1 notwendigen Überdruck erhält.

## Patentansprüche

1. Mit einem ausfahrbaren, in Stoßrichtung federnd gelagerten Stoßfänger versehenes Stoßfängersystem für ein Kraftfahrzeug, mit einer Antriebseinrichtung (9,33,40), die den Stoßfänger (1) in eine geeignete Position fährt und einer mit der Antriebseinrichtung verbundene Steuereinrichtung, die in Abhängigkeit von der Gefahrensituation der Antriebseinrichtung vorgibt, in welche Stellung der Stoßfänger zu fahren ist, und mit einer Ausgleichsöffnung zwischen einem Ausgleichsraum (6) und einem Zylinder (7), welche um so größer ist, je weiter der Stoßfänger ausgefahren ist, dadurch **gekennzeichnet**, daß die Ausgleichsöffnung von einer Drosselnut (15) in einem Zylinderstift (17) gebildet wird, welcher weitgehend dichtend an einer Zylinderwand geführt ist, die den Ausgleichsraum (6) begrenzt.

2. Stoßfängersystem nach Anspruch 1, dadurch **gekennzeichnet**, daß die Drosselnut (15) sich in Bewegungsrichtung des Stoßfängers erstreckt und sich in Richtung zum Fahrzeug hin vertieft.

3. Stoßfängsystem nach Anspruch 1 oder 2, dadurch **gekennzeichnet**, daß die federnde Lagerung durch Flüssigkeitsdämpfung, erreicht wird, indem das fahrzeugseitige Ende des Stoßfängers (1) mit einem Kolben (5) in dem das Druckmittel enthaltenden Zylinder (7) verschiebbar gelagert ist.

4. Stoßfängereinrichtung nach Anspruch 3, dadurch **gekennzeichnet**, daß der Zylinder (7) über zumindest ein Ventil (11) mit dem Ausgleichsraum (6) verbunden ist.

5. Stoßfängersystem nach einem der Ansprüche 1 bis 4, dadurch **gekennzeichnet**, daß die Antriebseinrichtung eine im Zylinder (5) angeordnete, im eingefahrenen Zustand des Stoßfängers (1) vorgespannte Feder (9) ist.

6. Stoßfängersystem nach Anspruch 5, dadurch **gekennzeichnet**, daß die Feder (9) eine Spiralfeder ist.

7. Stoßfängersystem nach einem der Ansprüche 1 bis 4, dadurch **gekennzeichnet**, daß der Antrieb eine Pumpe ist, welche mittels eines Druckmittels den Kolben (5) in seine ausgefahrene Stellung treibt.

8. Stoßfängersystem nach Anspruch 7, dadurch **gekennzeichnet**, daß das Druckmittel Luft ist, welches zum Antrieb des Stoßfängers in den Ausgleichsraum (6) gepreßt wird.

9. Stoßfängersystem nach Anspruch 8, dadurch **gekennzeichnet**, daß die Dämpfungsflüssigkeit von der Druckluft durch eine mechanische Trennschicht (30), insbesondere Dichtung, getrennt ist.

10. Stoßfängersystem nach Anspruch 9, dadurch **gekennzeichnet**, daß die Dichtung eine im Ausgleichsraum (6) verschiebbare Gummidichtung ist (Fig. 5 bis 7).

11. Stoßfängersystem nach einem der Ansprüche 1 bis 6, dadurch **gekennzeichnet**, daß die Antriebseinrichtung ein Elektromotor ist, daß der längs verschieblich und nicht drehbar gelagerte Stoßfänger eine mit einem Außengewinde (41) versehene Kolbenstange (1) betätigt wird und daß der Stoßfänger über eine durch die Wirkung des Motors (14) sich drehende Mutter über das Schraubengewinde ein- bzw. ausfahrbar ist.

12. Antrieb nach Anspruch 11, dadurch **gekennzeichnet**, daß das Schraubengewinde (41) ein selbsthemmendes Gewinde ist.

13. Stoßfängersystem nach Anspruch 12, dadurch **gekennzeichnet**, daß zwischen dem Elektromotor (40) und der Mutter (42) eine Zahnradübersetzung (43,44) vorgsehen ist.

14. Stoßfängersystem nach einem der Ansprüche 1 bis 6, dadurch **gekennzeichnet**, daß der Antrieb ein vorgespannter Druckmittelraum (32) ist (Fig. 5 bis 7).

15. Stoßfängersystem nach einem der Ansprüche 1 bis 14, dadurch **gekennzeichnet**, daß die Steuerung mit einem Sensor versehen ist, der auf die jeweilige Gefahrensituation anspricht und die Steuerung aufgrund der Gefahrensituation den Antrieb (9,32,40) einstellt.

16. Stoßfängersystem nach Anspruch 15, dadurch **gekennzeichnet**, daß der Sensor auf die Verzögerung des Fahrzeugs, die Intensität der Bremsbetätigung, die Fahrzeuggeschwindigkeit oder den optisch gemessenen Abstand zum nächsten Hindernis anspricht.

## Claims

1. A bumper system for an automotive vehicle including an extendable bumper resiliently disposed in the direction of impact, a driving means (9,33,40) driving the bumper (1) into a suitable position, and a control means connected to the driving means which, in response to the dangerous situation, indicates to the driving means the position into which the bumper is to be driven, and including an equilibrium hole between an equilibrium chamber (6) and a cylinder (7) which is the larger the more the bumper has been extended,
**characterized** in that the equilibrium hole is a throttling groove (15) provided in a cylindrical pin (17) which extends on a cylinder wall confining the equilibrium chamber (6) in a virtually sealing manner.

2. A bumper system as claimed in claim 1,
**characterized** in that the throttling groove (15) extends in the direction of movement of the bumper and gains in depth toward the vehicle.

3. A bumper system as claimed in claim 1 or 2,
**characterized** in that the resilient mounting is achieved by liquid damping, in that the vehicle-side end of the bumper (1) with a piston (5) is displaceably arranged in the cylinder (7) containing pressure fluid.

4. A bumper system as claimed in claim 3,
**characterized** in that the cylinder (7), through at least one valve (11), is connected to the equilibrium chamber (6).

5. A bumper system as claimed in any one of the claims 1 to 4,
**characterized** in that the driving means is a spring (9) arranged within the cylinder (5) and prestressed in the retracted condition of the bumper (1).

6. A bumper system as claimed in claim 5,
**characterized** in that the spring (9) is a helical spring.

7. A bumper system as claimed in any one of claims 1 to 4,
**characterized** in that the drive is a pump which, by way of pressure fluid, drives the piston (5) into its extended position.

8. A bumper system a claimed in claim 7,
**characterized** in that the pressure fluid is air which is forced into the equilibrium chamber (6) to drive the bumper.

9. A bumper system as claimed in claim 8,
**characterized** in that the damping fluid is separated from the compressed air by a mechanical separating layer (30), preferably a seal.

10. A bumper system as claimed in claim 9,
**characterized** in that the seal is a rubber seal displaceable within the equilibrium chamber (6) (Figures 5 to 7).

11. A bumper system as claimed in any one of claims 1 to 6,
**characterized** in that the driving means is an electromotor, and the longitudinally and non-rotatably disposed bumper is actuated by a piston rod (1) having an external thread (41), and in that the bumper is extendable and retractable by way of a nut, rotating by the effect of the motor (14), and the screw-thread.

12. A drive as claimed in claim 11,
**characterized** in that the screw-thread (41) is a self-locking thread.

13. A bumper system as claimed in claim 12,
**characterized** in that a gear transmission (43,44) is provided between the electromotor (40) and the nut (42).

14. A bumper system as claimed in any one of claims 1 to 6,
**characterized** in that the drive is a prestressed pressure fluid chamber (32) (Figures 5 to 7).

15. A bumper system as claimed in any one of claims 1 to 14,
**characterized** in that the control means includes a sensor responding to the respective dangerous situation, and in that the control means adjusts the drive (9,32,40) in response to the dangerous situation.

16. A bumper system as claimed in claim 15,
**characterized** in that the sensor responds to the deceleration of the automotive vehicle, the intensity of the brake actuation, the speed of the automotive vehicle or the optically measured distance from the next obstacle.

## Revendications

1. Système de pare-chocs pour véhicule automobile, ce système étant pourvu d'un pare-chocs déployable et monté élastiquement suivant la direction de choc et comprenant un dispositif moteur (9, 33, 40), qui entraîne le pare-chocs (1) à une position appropriée, un dispositif de commande, qui est relié au dispositif moteur et qui fixe à l'avance, en fonction de la situation de danger du dispositif moteur, la position dans laquelle le pare-chocs doit être amené, et un orifice de compensation qui est situé entre une chambre de compensation (6) et un cylindre (7) et qui est d'autant plus grand que le pare-chocs est déployé d'une plus grande distance, caractérisé en ce que l'orifice de compensation est formé d'une rainure d'étranglement (15) pratiquée dans une tige cylindrique (17) qui est guidée d'une manière pratiquement étanche sur une paroi de cylindre qui délimite la chambre de compensation (6).

2. Système de pare-chocs selon la revendication 1, caractérisé en ce que la rainure d'étranglement (15) est pratiquée suivant la direction de déplacement du pare-chocs et est de plus en plus profonde en direction du véhicule.

3. Système de pare-chocs selon la revendication 1 ou 2, caractérisé en ce que le montage élastique est obtenu au moyen d'un amortissement à l'aide d'un liquide, l'extrémité du pare-chocs (1) située du côté du véhicule, qui comporte un piston (5), étant montée d'une manière coulissante dans le cylindre (7) contenant l'agent de pression.

4. Système de pare-chocs selon la revendication 3, caractérisé en ce que le cylindre (7) communique avec la chambre de compensation (6) par l'intermédiaire d'au moins une valve (11).

5. Système de pare-chocs selon l'une des revendications 1 à 4, caractérisé en ce que le dispositif moteur est un ressort (9) disposé dans le cylindre (5) et soumis à une précontrainte dans la position rétractée du pare-chocs (1).

6. Système de pare-chocs selon la revendication 5, caractérisé en ce que le ressort (9) est un ressort hélicoïdal.

7. Système de pare-chocs selon l'une des revendications 1 à 4, caractérisé en ce que le dispositif moteur est une pompe qui déplace le piston (5) à sa position déployée au moyen d'un agent de pression.

8. Système de pare-chocs selon la revendication 7, caractérisé en ce que l'agent de pression est de l'air qui est comprimé dans la chambre de compensation (6) en vue d'exercer une action motrice sur le pare-chocs.

9. Système de pare-chocs selon la revendication 8, caractérisé en ce que le liquide d'amortissement est séparé de l'air comprimé au moyen d'une couche mécanique séparatrice (30), notamment une garniture d'étanchéité.

10. Système de pare-chocs selon la revendication 9, caractérisé en ce que la garniture d'étanchéité est une garniture d'étanchéité en caoutchouc disposée d'une manière coulissante dans la chambre de compensation (6) (figures 5 à 7).

11. Système de pare-chocs selon l'une des revendications 1 à 6, caractérisé en ce que le dispositif moteur est un moteur électrique, en ce que le pare-chocs, monté de façon à pouvoir coulisser longitudinalement et de façon à ne pas pouvoir tourner, est actionné par l'intermédiaire d'une tige de piston (1) pourvue d'un filetage extérieur (41) et en ce que le pare-chocs est agencé de façon à pouvoir être respectivement rétracté et déployé au moyen du filetage par l'intermédiaire d'un écrou entraîné en rotation sous l'action du moteur (14).

12. Système de pare-chocs selon la revendication 11, caractérisé en ce que le filetage (41) est un filetage autobloquant.

13. Système de pare-chocs selon la revendication 12, caractérisé en ce qu'un engrenage réducteur (43, 44) est prévu entre le moteur électrique (40) et l'écrou (42).

14. Système de pare-chocs selon l'une des revendications 1 à 6, caractérisé en ce que le dispositif moteur est une chambre d'agent de pression (32) mise en état de précontrainte (figures 5 à 7).

15. Système de pare-chocs selon l'une des revendications 1 à 14, caractérisé en ce que le dispositif de commande est pourvu d'un capteur qui réagit à la situation de danger se présentant à chaque instant et en ce que le dispositif de commande règle le dispositif moteur (9, 32, 40) sur la base de la situation de danger.

16. Système de pare-chocs selon la revendication 15, caractérisé en ce que le capteur réagit à la décélération du véhicule, à l'intensité de l'actionnement des freins, à la vitesse du véhicule ou à la distance de l'obstacle le plus proche mesurée par voie optique.
